# FASCICULE DE BREVET EUROPEEN

(11) **EP 2 021 265 B1**
(45) Date de publication et mention de la délivrance du brevet: **02.09.2009**
(21) Numéro de dépôt: 07765987.8
(22) Date de dépôt: 03.05.2007
(51) Int. Cl.: B65D 83/20, B05B 11/00, B29C 45/16

(54) **TETE DE DISTRIBUTION DE PRODUIT FLUIDE, DISTRIBUTEUR COMPRENANT UNE TELLE TETE ET PROCEDE DE FABRICATION D'UNE TELLE TETE**
SPENDERKOPFTEIL FÜR FLÜSSIGPRODUKT, SPENDER MIT DERARTIGEM KOPFTEIL UND VERFAHREN ZUR HERSTELLUNG EINES DERARTIGEN KOPFTEILS
FLUID PRODUCT DISPENSING HEAD, DISPENSER COMPRISING SUCH A HEAD AND METHOD TO MANUFACTURE SUCH A HEAD

(30) Priorité: 04.05.2006 FR 0651592
(43) Date de publication de la demande: 11.02.2009
(73) Titulaire: Valois SAS, 27110 Le Neubourg (FR)
(72) Inventeur: MICHAUX, Sébastien, 76320 Caudebec-lès-Elbeuf (FR); PARMENTIER, Alexandra, 27120 Menille (FR)
(74) Mandataire: CAPRI
(86) Numéro de dépôt international: PCT/FR2007/051204
(87) Numéro de publication internationale: WO 2007/128933

(56) Documents cités:
- EP-A2- 0 899 213
- WO-A2-01/44076
- FR-A- 2 818 167
- US-A1- 2005 133 542

## Description

La présente invention concerne une tête de distribution de produit fluide destinée à être montée sur une sortie d'un organe de distribution de produit fluide tel qu'une pompe ou une valve. La présente invention concerne aussi un procédé de fabrication de cette tête. La présente invention concerne également un distributeur de produit fluide comprenant un réservoir, un organe de distribution tel qu'une pompe ou une valve et une tête de distribution selon l'invention. Les domaines d'application privilégiés, mais non exclusifs, de la présente invention sont la parfumerie, la cosmétique et la pharmacie.

Le type de tête de la présente invention est d'un type particulier comprenant un embout destiné à être monté sur ou associé à la sortie d'une pompe ou d'une valve, une buse de distribution au niveau de laquelle le produit fluide sort de la tête et un tube souple reliant l'embout à la buse et assurant l'alimentation de produit fluide depuis l'embout jusqu'à la buse. On utilise ce type particulier de tête de distribution lorsque la buse est découplée de l'embout, de sorte qu'il peut se déplacer indépendamment de la buse. Le tube souple assure ainsi la liaison découplée entre l'embout et la buse.

Ce type de tête est particulièrement utilisé dans les distributeurs de produit fluide dont la buse de distribution est fixe ou stationnaire, alors que le poussoir est déplaçable axialement en va-et-vient. La buse de distribution est donc découplée par rapport au poussoir mobile. On peut également utiliser ce type de tête de distribution dans les distributeurs à actionnement latéral utilisant des moyens d'actionnement articulés du type « genouillère ». Là encore, la buse de distribution est découplée par rapport à l'embout qui coiffe la sortie de la pompe ou de la valve. Le déplacement relatif entre la buse et l'embout est assuré par la déformation du tube souple de liaison. Une tête de distribution ayant les caractéristiques du préambule de la revendication 1 est décrit dans le document FR-A-2 818 167.

Jusqu'à présent, les tubes souples de ce genre de tête de distribution sont réalisés à partir de matériaux plastiques sensiblement rigides, bien qu'ils soient déformables. En effet, il faut que le tube souple présente une rigidité suffisante pour permettre d'emmancher ces deux extrémités respectivement sur l'embout et sur la buse. La rigidité du tube doit permettre tout d'abord de le saisir fermement pour l'emmancher sur l'embout et la buse, mais doit également garantir un bon raccordement du tube sur l'embout et la buse. En effet, avec un tube trop souple, on ne pourrait pas le saisir fermement sous peine de l'écraser et de le détériorer et l'emmanchement de ces extrémités ne serait pas suffisamment stable et ferme pour garantir une bonne tenue étanche du tube sur l'embout et la buse. C'est pourquoi les tubes souples de liaison sont toujours relativement rigides.

Cependant, cette rigidité relative du tube souple ne permet pas toujours de découpler efficacement l'embout de la buse. En d'autres termes, le tube est souvent trop rigide pour s'accommoder au déplacement relatif entre l'embout et la buse.

La rigidité relative du tube souple est également un inconvénient même lorsque l'embout n'est pas déplaçable par rapport à la buse. Dans certains cas, la buse est située en éloignement de l'embout et le tube souple doit suivre un chemin très sinueux. Dans ce cas, si le tube souple est trop rigide, il ne peut pas être utilisé pour relier l'embout à la buse.

La présente invention a donc pour but de remédier aux inconvénients précités de l'art antérieur en définissant un tube souple pouvant être utilisé dans la plupart des configurations embout/buse, qu'ils soient ou non déplaçables l'un par rapport à l'autre.

Pour ce faire, la présente invention propose que le tube souple soit surmoulé sur au moins un parmi l'embout et la buse. Avantageusement, le tube souple comprend deux extrémités de liaison surmoulées respectivement sur l'embout et sur la buse. Le tube souple peut ainsi être réalisé en un matériau choisi dans la famille des thermoplastiques élastomères. Le surmoulage permet l'utilisation de matériaux plastiques plus souples offrant moins de rigidité. Le surmoulage permet de se départir des exigences de rigidité auparavant nécessaires pour pouvoir saisir le tube et l'emmancher sur l'embout et/ou sur la buse. D'autre part, en utilisant des matériaux plus souples et moins rigides, la buse peut être parfaitement et presque totalement découplée de l'embout tout en garantissant une bonne alimentation de produit fluide. L'embout et la buse peuvent ainsi être montés avec des configurations et des dispositions qui seraient impossibles avec un tube souple à raccorder ou emmancher.

Selon une forme de réalisation avantageuse, l'embout est mobile par rapport à la buse en déformant le tube souple. Avantageusement, la tête de distribution peut comprendre des moyens d'actionnement en prise à la fois avec l'embout et la buse pour déplacer l'embout par rapport à la buse, les moyens d'actionnement formant avantageusement un support de buse pour recevoir la buse. Avantageusement, les moyens d'actionnement sont formés de manière monobloc avec le restant de la tête. De préférence, les moyens d'actionnement comprennent des parties articulées. Ces moyens d'articulation peuvent par exemple se présenter sous la forme d'une « genouillère » permettant un actionnement latéral. On n'appuie donc pas directement sur l'embout à la manière d'un poussoir, mais sur un poussoir latéral qui va transmettre la force d'appui par l'intermédiaire des parties articulées jusqu'à la buse et l'embout. Il est cependant possible d'appuyer directement sur l'embout ou sur une pièce rapportée sur l'embout et faisant fonction de poussoir axial.

La présente invention définit également un procédé de fabrication d'une tête de distribution telle que définie ci-dessus, dans lequel le tube souple est moulé rectiligne en utilisant une broche rectiligne qui traverse l'embout et/ou la buse. Le conduit interne formé par le tube souple est donc réalisé par la broche rectiligne que l'on a introduite à partir de l'embout ou de la buse. Une fois la broche démoulée, le tube souple peut être déformé à volonté.

Selon un autre procédé de fabrication d'une tête de distribution telle que décrite ci-dessus, le tube souple est moulé rectiligne en utilisant une broche rectiligne qui traverse l'embout et/ou la buse, la buse est ensuite montée dans son support en déformant le tube. Alors que dans l'art antérieur il est nécessaire d'emmancher les deux extrémités du tube, avec l'invention, il suffit de monter la buse sur son support sans se soucier du raccordement du tube.
Avantageusement, les moyens d'actionnement sont moulés rectilignes en s'étendant sensiblement perpendiculairement au tube. Ceci permet un moulage monobloc plus simple de la tête.

L'invention définit également un distributeur de produit fluide comprenant un réservoir de produit fluide, un organe de distribution de produit fluide, tel qu'une pompe ou une valve, définissant un corps monté fixement sur le réservoir et une tige d'actionnement déplaçable axialement en va-et-vient, et une tête de distribution tel que défini ci-dessus, l'embout étant en prise avec la tige d'actionnement de sorte que l'embout est solidaire en déplacement avec la tige, la buse étant montée de manière stationnaire par rapport au réservoir et au corps, le déplacement axial de l'embout engendrant une déformation du tube souple surmoulé.

L'invention sera maintenant plus amplement décrite en référence aux dessins joints donnant à titre d'exemples non limitatifs deux modes de réalisation de l'invention.

Sur les figures :
- la figure 1 est une vue en coupe transversale verticale à travers la partie haute d'un distributeur incorporant une tête de distribution selon une première forme de réalisation de l'invention,
- la figure 2 est une vue en perspective de la tête de distribution de la figure 1 en sortie de moule,
- la figure 3 est une vue en coupe transversale verticale de la tête de la figure 2 en fin de moulage,
- la figure 4 est une vue en coupe transversale à travers une tête de distribution selon un second mode de réalisation de l'invention en sortie de moule,
- la figure 5 est une vue latérale de la tête de distribution de la figure 4 à l'état monté, et
- la figure 6 est une vue en perspective de la tête de distribution de la figure 5.

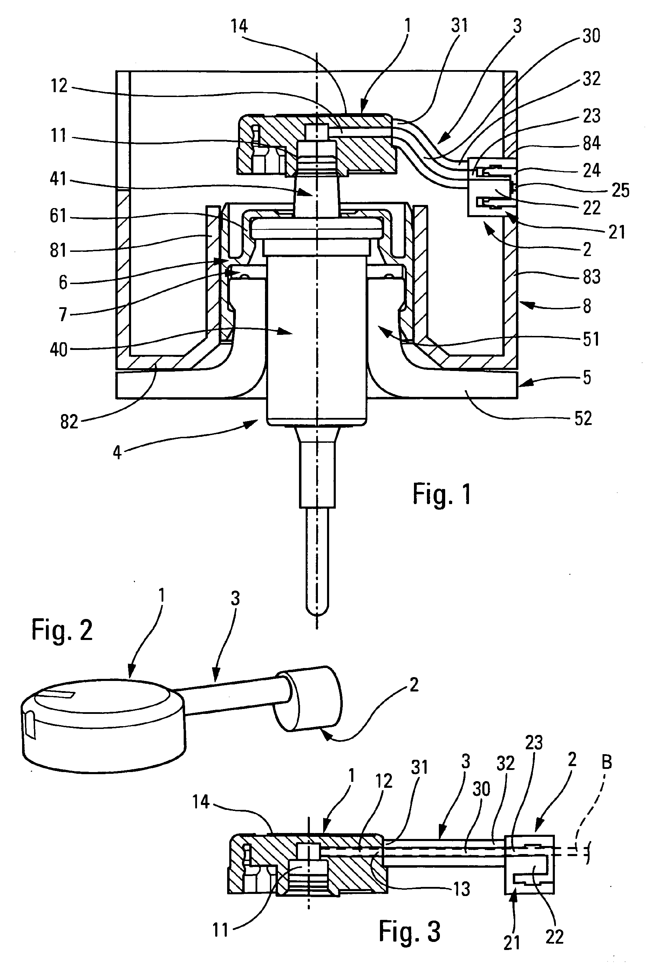

On se référera tout d'abord aux figures 1 à 3 pour expliquer en détail la fabrication, la structure et le fonctionnement de la tête de distribution de cette première forme de réalisation. Sur les figures 2 et 3, on voit que la tête de distribution comprend trois parties, à savoir un embout 1, une buse 2 et un tube souple de liaison 3.

L'embout 1 peut être réalisé par injection/moulage d'une matière plastique relativement ou sensiblement rigide. L'embout 1 forme un manchon de raccordement 11 destiné à être emmanché en force sur la sortie d'un organe de distribution tel qu'une pompe ou une valve, comme on le verra ci-après. L'embout 1 comprend également un canal interne 12 qui fait communiquer le manchon 11 avec une sortie 13 située ici latéralement. D'autre part, l'embout 1 peut définir une surface de poussée 14 sur laquelle l'utilisateur peut appuyer à l'aide d'un ou de plusieurs doigts pour déplacer l'embout axialement en va-et-vient. L'embout peut également être associé à une pièce servant de poussoir.

La buse de distribution 2 comprend ici un porte-gicleur 21 associé à un gicleur 24. Le porte-gicleur 21 comprend un alésage d'entrée 23 qui fait communiquer l'extérieur avec un logement annulaire définissant en son centre un noyau 22. Le gicleur 24 est engagé dans ce logement annulaire autour du noyau 22. Le gicleur 24, comme visible sur la figure 1, définit un orifice de distribution 25, qui peut être un orifice de pulvérisation. Les pièces de la buse peuvent être réalisées par injection/moulage de matières plastiques rigides.

Le tube souple 3 relie la sortie 13 du canal interne 12 à l'alésage d'entrée 23. Le tube souple 3 définit un canal interne 30 qui réalise la communication fluidique entre le conduit 12 et l'alésage 23. Le tube souple 3 comprend une première extrémité 31 raccordée à l'embout 1 et une seconde extrémité 32 raccordée à la buse 2. Selon l'invention, ces deux extrémités 31 et 32 sont respectivement surmoulées sur l'embout 1 et sur la buse 2. Ainsi, la tête de distribution peut être réalisée de manière monobloc dans un seul et même moule. Dans certains cas, il est possible que le tube 3 ne soit surmoulé que sur l'embout 1 ou que sur la buse 2. Toutefois, de préférence, le tube 3 est surmoulé à la fois sur l'embout 1 et la buse 2. Comme on peut le voir sur la figure 3, l'alésage d'entrée 23, le conduit interne 30 et la canal 12 peuvent être réalisés à l'aide d'une broche rectiligne B qui est introduite à partir de la buse 2. Cette broche B peut s'étendre jusqu'au manchon de raccordement 11 de l'embout 1. Il est à noter que cette broche B est rectiligne de manière à pouvoir être facilement démoulée. Selon la configuration de l'embout 1 et/ou de la buse 2, cette broche B peut être introduite soit à partir de l'embout 1 soit à partir de la buse 2. En effet, la broche B peut être introduite à partir de l'embout 1 dans le cas où le canal interne 12 s'étend dans le même axe que le manchon 11. Une fois la tête démoulée, il suffit de rapporter le gicleur 24 sur le porte-gicleur 21. La tête peut ensuite être mise en place, par exemple comme représenté sur la figure 1. En variante, il est également envisageable que la buse ne comprenne pas de gicleur et qu'elle soit ainsi monobloc.

Sur la figure 1, l'embout 1 est monté sur l'extrémité libre d'une tige d'actionnement 41 faisant partie d'un organe de distribution 4, qui peut être une pompe ou une valve. Cet organe de distribution 4 comprend de manière classique un corps 40 et une tige d'actionnement 41. Cette tige 41 définit un conduit de refoulement interne (non représenté) qui débouche au niveau de son extrémité supérieure, c'est-à-dire dans le manchon 11. Ainsi, le produit fluide distribué par l'organe de distribution passe à travers l'embout 1, c'est-à-dire à travers le manchon 11 et le canal interne 12 pour ensuite s'écouler à travers le tube souple 3 pour parvenir finalement au niveau de la buse 2. De manière conventionnelle, le corps 40 de l'organe de distribution est monté fixement sur le col 51 d'un réservoir 5 au moyen d'une bague de fixation 6 qui définit un logement de réception 61 pour le corps 40. En outre, la bague 6 comprend des moyens pour venir s'accrocher sur le col 51. Un joint de col 7 peut être utilisé pour assurer l'étanchéité. D'autre part, le distributeur comprend une pièce d'habillage 8 définissant une frette interne 81, une bride de liaison annulaire 82 et une enveloppe externe 83. La frette 81 vient en prise autour de la bague 6 et assure avantageusement son blocage sur le col 51. La bride de liaison 82 peut venir en appui sur l'épaulement 52 du réservoir 5 à partir duquel le col 51 fait saillie vers le haut. L'enveloppe externe 83 définit une ouverture 84 dans laquelle la buse 2 est montée fixement. Par conséquent, la buse 2 est fixe ou statique par rapport au réservoir 5 et au corps 40 de l'organe de distribution. En revanche, cette buse 2 est mobile par rapport à l'embout 1 qui est monté sur la tige d'actionnement 41 qui est amenée à se déplacer axialement en va-et-vient. Ainsi, en appuyant par exemple sur la surface d'appui 14 de l'embout 1, celui-ci va se déplacer avec la tige d'actionnement 41 en engendrant une déformation du tube souple 3.

Du fait que le tube souple 3 est surmoulé sur l'embout 1 et sur la buse 2 (et non pas rapporté entre l'embout 1 et la buse 2), il est possible de le réaliser avec un matériau plastique beaucoup plus souple qui assure un degré de liberté presque totale entre la buse 2 et l'embout 1. Ces deux pièces sont ainsi totalement découplées. De plus, on élimine une opération de montage délicate du tube souple 3 sur l'embout 1 et la buse 2, qui imposait d'utiliser un tube souple relativement rigide.

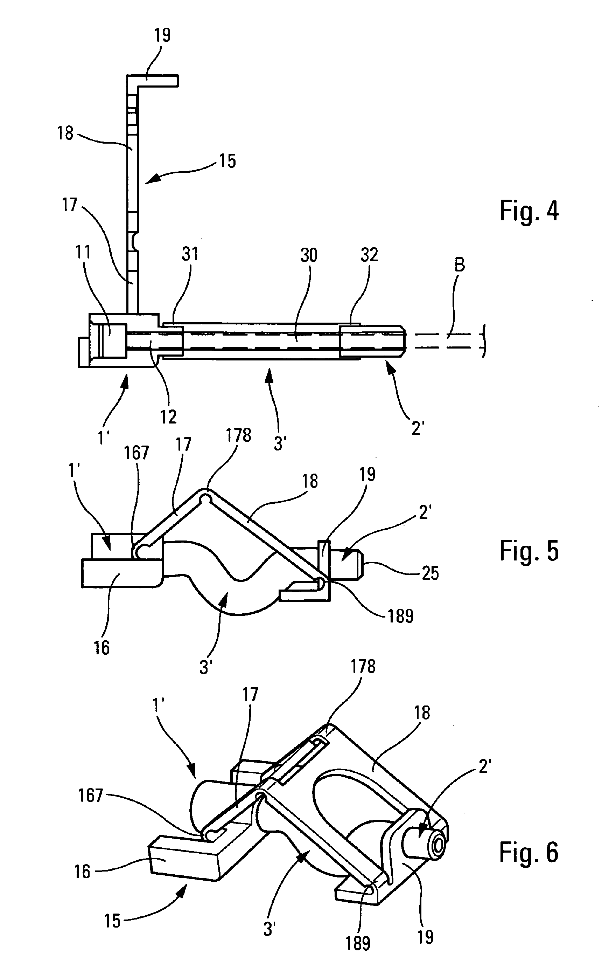

On se référera maintenant aux figures 4 à 6 pour expliquer un second mode de réalisation pour une tête de distribution selon l'invention.

La tête de distribution comprend également un embout 1', une buse 2' et un tube souple 3' qui est surmoulé sur l'embout 1' et/ou la buse 2'. L'embout 1' comprend un manchon de raccordement 11 destiné à être monté sur la sortie d'un organe de distribution. L'embout comprend un canal interne 12 qui fait communiquer le manchon 11 avec le conduit interne 30 du tube souple 3. Ce tube souple comprend une première extrémité 31 surmoulée sur l'embout l' et une seconde extrémité 32 surmoulée sur la buse 2'. Dans ce mode de réalisation, la buse 2' définit un orifice de distribution simple assurant une sortie sans pulvérisation du produit fluide. Toutefois, on peut également imaginer que la buse 2' permet une pulvérisation. Tout comme dans le premier mode de réalisation, le conduit interne 30 et le canal interne 12 peuvent être réalisés à l'aide d'une broche rectiligne B qui peut être introduite à partir de la buse 2' ou de l'embout 1', étant donné que le canal interne 12 s'étend axialement dans le prolongement du manchon 11.

D'autre part, cette tête de distribution selon l'invention incorpore également des moyens d'actionnement 15 qui sont avantageusement réalisés de manière monobloc avec l'embout 1'. Ces moyens d'actionnement comprennent plusieurs parties 16, 17, 18 et 19 articulées les unes par rapport aux autres au niveau d'articulations 167, 178 et 189. La première partie 16 est intégrée à l'embout 1', comme on peut le voir sur la figure 6. La deuxième partie 17 est reliée à la première partie 16 par une première articulation 167. La troisième partie 18 est articulée par rapport à la deuxième partie 17 par une seconde articulation 178. Enfin, la quatrième partie 19 est articulée par rapport à la troisième partie 18 par une troisième articulation 189. Cette partie 19 sert de support de buse pour la buse 2', comme on peut le voir sur les figures 5 et 6. En sortie de moule, comme représenté sur la figure 4, l'ensemble formé par l'embout 1', la buse 2' et le tube 3' s'étend de manière sensiblement perpendiculaire par rapport aux moyens d'actionnement 15. Le tube souple 30 est alors parfaitement rectiligne. Pour parvenir à la configuration des figures 5 et 6, il faut plier les moyens d'actionnement 15 au niveau de ces articulation 167, 178 et 189, puis déformer le tube souple 3 pour pouvoir rapporter la buse 2' dans le support de buse 19. On peut ainsi remarquer que la tête de distribution de cette seconde forme de réalisation peut être réalisée de manière monobloc en incorporant les moyens d'actionnement 15. La mise dans la configuration de montage représentée sur les figures 5 et 6 est relativement simple et imposée par les articulations 167, 178 et 189.

La tête de distribution des figures 4, 5 et 6 peut être utilisée dans un distributeur de produit fluide à actionnement latéral, comprenant par exemple un poussoir latéral (non représenté) qui vient appuyer sur l'articulation 178. Cette poussée engendre un déplacement des parties 17 et 18 en modifiant leur angle relatif. Comme résultat, la première pièce 16 va se déplacer translativement par rapport au support de buse 19. Ce déplacement relatif est accompagné par une déformation du tube souple 3'.

Bien que les deux modes de réalisation des figures mettent en oeuvre des embouts déplaçables par rapport à une buse fixe, on peut également mettre en oeuvre la présente invention dans des têtes de distribution dans lesquelles l'embout est fixe par rapport à la buse, le conduit souple assurant une alimentation sinueuse entre l'embout et la buse. On peut également imaginer que l'embout soit fixe et la buse mobile. On peut aussi envisager que à la fois l'embout et la buse soient mobiles indépendamment l'un de l'autre. Sans sortir du cadre de l'invention, on peut également imaginer que l'embout soit incorporé à l'organe de distribution. Dans ce cas, l'embout ne formerait pas de manchon de raccordement.

## Revendications

1. Tête de distribution de produit fluide destinée à être montée sur une sortie (41) d'un organe de distribution de produit fluide (4), tel qu'une pompe ou une valve, la tête comprenant :
- un embout (1; 1') adapté à être monté à la sortie (41) de l'organe de distribution (4),
- une buse de distribution de produit fluide (2 ; 2') au niveau de laquelle le produit fluide sort de la tête, et
- un tube souple (3 ; 3') reliant l'embout (1 ; 1') à la buse (2 ; 2'), le produit fluide étant alimenté de l'embout à la buse à travers ce tube souple,
**caractérisé en ce que** ce tube souple (3 ; 3') est surmoulé sur au moins un parmi l'embout (1 ; 1') et la buse (2 ; 2').

2. Tête de distribution selon la revendication 1, dans laquelle le tube souple (3 ; 3') comprend deux extrémités de liaison (31, 32) surmoulées respectivement sur l'embout (1 ; 1') et sur la buse (2 ; 2').

3. Tête de distribution selon la revendication 1 ou 2, dans laquelle le tube souple (3 ; 3') est réalisé en un matériau choisi dans la famille des thermoplastiques élastomères.

4. Tête de distribution selon la revendication 1, 2 ou 3, dans laquelle l'embout (1 ; 1') est mobile par rapport à la buse (2 ; 2') en déformant le tube souple (3 ; 3').

5. Tête de distribution selon la revendication 4, comprenant des moyens d'actionnement (15) en prise à la fois avec l'embout (1') et la buse (2') pour déplacer l'embout par rapport à la buse, les moyens d'actionnement (15) formant avantageusement un support de buse (19) pour recevoir la buse (2').

6. Tête de distribution selon la revendication 5, dans laquelle les moyens d'actionnement (15) sont formés de manière monobloc avec le restant de la tête.

7. Tête de distribution selon la revendication 5 ou 6, dans laquelle les moyens d'actionnement (15) comprennent des parties articulées (16, 17, 18, 19).

8. Procédé de fabrication d'une tête de distribution selon l'une quelconque des revendications précédentes, dans lequel le tube souple (3 ; 3') est moulé rectiligne en utilisant une broche rectiligne (B) qui traverse l'embout (1 ; 1') et/ou la buse (2 ; 2').

9. Procédé de fabrication d'une tête de distribution selon les revendications 5 à 7, dans lequel le tube souple (3') est moulé rectiligne en utilisant une broche rectiligne (B) qui traverse l'embout (1') et/ou la buse (2'), la buse (2') est ensuite montée dans son support (19) en déformant le tube (3').

10. Procédé de fabrication d'une tête de distribution selon la revendication 9, dans lequel les moyens d'actionnement (15) sont moulés rectilignes en s'étendant sensiblement perpendiculairement au tube (3').

11. Distributeur de produit fluide comprenant :
- un réservoir de produit fluide (5),
- un organe de distribution de produit fluide (4), tel qu'une pompe ou une valve, définissant un corps (40) monté fixement sur le réservoir (5) et une tige d'actionnement (41) déplaçable axialement en va-et-vient, et
- une tête de distribution selon l'une quelconque des revendications 1 a 7, l'embout (1 ; 1') étant en prise avec la tige d'actionnement (41) de sorte que l'embout est solidaire en déplacement avec la tige, la buse (2 ; 2') étant montée de manière stationnaire par rapport au réservoir (5) et au corps (40), le déplacement axial de l'embout (1 ; 1') engendrant une déformation du tube souple surmoulé (3 ; 3').

## Claims

1. A fluid dispenser head for mounting on an outlet (41) from a fluid dispenser member (4) such as a pump or a valve, the head comprising:
• an endpiece (1; 1') that is adapted to be mounted on the outlet (41) of the dispenser member (4);
• a fluid dispenser nozzle (2; 2') through which the fluid leaves the head; and
• a flexible hose (3; 3') connecting the endpiece (1; 1') to the nozzle (2; 2'), the fluid being fed from the endpiece to the nozzle through the flexible hose; the fluid dispenser head being **characterized in that** the flexible hose (3; 3') is injection-molded on at least one of the endpiece (1; 1') and the nozzle (2; 2').

2. A dispenser head according to claim 1, in which the flexible hose (3; 3') includes two connection ends (31, 32) that are injection-molded respectively on the endpiece (1; 1') and on the nozzle (2; 2').

3. A dispenser head according to claim 1 or claim 2, in which the flexible hose (3; 3') is made of a material selected from the family of thermoplastic elastomers.

4. A dispenser head according to claim 1, 2, or 3, in which the endpiece (1; 1') is movable relative to the nozzle (2; 2') with the flexible hose (3; 3') deforming.

5. A dispenser head according to claim 4, including actuator means (15) that are engaged both with the endpiece (1') and with the nozzle (2') so as to displace the endpiece relative to the nozzle, the actuator means (15) advantageously forming a nozzle support (19) for receiving the nozzle (2').

6. A dispenser head according to claim 5, in which the actuator means (15) are formed integrally with the remainder of the head.

7. A dispenser head according to claim 5 or claim 6, in which the actuator means (15) comprise hinged portions (16, 17, 18, 19).

8. A method of manufacturing a dispenser head according to any preceding claim, in which the flexible hose (3, 3') is molded in rectilinear shape by using a rectilinear pin (B) that passes through the endpiece (1; 1') and/or the nozzle (2; 2').

9. A method of manufacturing a dispenser head according to claims 5 to 7, in which the flexible hose (3') is molded in rectilinear shape by using a rectilinear pin (B) that passes through the endpiece (1') and/or the nozzle (2'), and the nozzle (2') is then mounted in its support (19) with the hose (3') deforming.

10. A method of manufacturing a dispenser head according to claim 9, in which the actuator means (15) are molded in rectilinear shape, extending substantially perpendicularly to the hose (3').

11. A fluid dispenser comprising:
• a fluid reservoir (5);
• a fluid dispenser member (4), such as a pump or a valve, defining a body (40) that is mounted in stationary manner on the reservoir (5), and an actuator rod (41) that is axially displaceable down and up; and
• a dispenser head according to claims 1 to 7, the endpiece (1; 1') being engaged with the actuator rod (41), such that the endpiece is secured in displacement with the rod, the nozzle (2; 2') being mounted in stationary manner relative to the reservoir (5) and to the body (40), the axial displacement of the endpiece (1; 1') causing the injection-molded flexible hose (3; 3') to deform.

## Patentansprüche

1. Fluidprodukt-Abgabekopf zur Anbringung auf einem Auslass (41) eines Fluidprodukt-Abgabeorgans (4), wie etwa einer Pumpe oder eines Ventils, wobei der Kopf aufweist:
- ein Ansatzstück (1; 1') das dazu ausgelegt ist, am Auslass (41) des Abgabeorgans (4) angebracht zu werden,
- eine Fluidprodukt-Abgabdüse (2; 2'), auf deren Niveau das Fluidprodukt den Kopf verlässt, und
- einen nachgiebigen Schlauch (3, 3'), der das Ansatzstück (1, 1') mit der Düse (2, 2') verbindet, wobei das Fluidprodukt ausgehend von dem Ansatzende mit der Düse durch diesen nachgiebigen Schlauch gefördert wird,
**dadurch gekennzeichnet, dass** der nachgiebige Schlauch (3, 3') auf zumindest entweder dem Ansatzstück (1, 1') oder der Düse (2, 2') abgeformt ist.

2. Abgabekopf nach Anspruch 1, wobei der nachgiebige Schlauch (3, 3') zwei Verbindungsenden (31, 32) aufweist, die jeweils auf dem Ansatzstück (1, 1') und der Düse (2; 2') abgeformt sind.

3. Abgabekopf nach Anspruch 1 oder 2, wobei der nachgiebige Schlauch (3, 3') aus einem Material hergestellt ist, das aus der Familie thermoplastischer Elastomere ausgewählt ist.

4. Abgabekopf nach Anspruch 1, 2 oder 3, wobei das Ansatzstück (1; 1') in bezug auf die Düse (2, 2') unter Verformung des nachgiebigen Schlauchs (3, 3') beweglich ist.

5. Abgabekopf nach Anspruch 4, aufweisend Betätigungsmittel (15) in gleichzeitigem Eingriff mit dem Ansatzstück (1') und der Düse (2') zum Verschieben des Ansatzstücks in bezug auf die Düse, wobei die Betätigungsmittel (15) bevorzugt einen Düsenträger (19) bilden, um die Düse (2') aufzunehmen.

6. Abgabekopf nach Anspruch 5, wobei die Betätigungsmittel (15) einstückig mit dem Rest des Kopfs gebildet sind.

7. Abgabekopf nach Anspruch 5 oder 6, wobei die Betätigungsmittel (15) Gelenkteile (16, 17, 18, 19) aufweisen.

8. Verfahren zur Herstellung eines Abgabekopfs nach einem der vorangehenden Ansprüche, bei dem der nachgiebige Schlauch (3; 3') unter Verwendung eines geradlinigen Dorns (B) geradlinig geformt wird, der das Ansatzstück (1; 1') und/oder die Düse (2; 2') quert.

9. Verfahren zur Herstellung eines Abgabekopfs nach einem der Ansprüche 5 bis 7, bei dem der nachgiebige Schlauch (3') unter Verwendung eines geradlinigen Dorns (B) geradlinig geformt wird, der das Ansatzstück (1') und/oder die Düse (2') quert, wobei die Düse (2') daraufhin in dem Träger (19) unter Verformung des Schlauchs (3') angebracht wird.

10. Verfahren zur Herstellung eines Abgabekopfs nach Anspruch 9, wobei die Betätigungsmittel (15) zur Erstreckung im Wesentlichen senkrecht zum Schlauch (3') geradlinig geformt werden.

11. Fluidprodukt-Spender aufweisend:
- einen Fluidprodukt-Vorratsbehälter (5),
- ein Fluidprodukt-Abgabeorgan (4), wie etwa eine Pumpe oder ein Ventil, das einen Körper (40) festlegt, der auf dem Vorratsbehälter (5) fest angebracht ist und eine Betätigungsstange (41), die axial hin und her laufend verschiebbar ist, und
- einen Abgabekopf nach einem der Ansprüche 1 bis 7, wobei das Ansatzstück (1; 1') im Eingriff mit der Betätigungsstange (41) derart steht, dass das Ansatzstück bei der Verschiebung mit der Stange zusammen bleibt, wobei die Düse (2; 2') in bezug auf den Vorratsbehälter (5) und den Körper (40) stationär angebracht ist, wobei die axiale Verschiebung des Ansatzstücks (1; 1') eine Verformung des abgeformten nachgiebigen Schlauchs (3, 3') mit sich bringt.
